# EUROPEAN PATENT SPECIFICATION

(11) **EP 0 362 574 B1**
(45) Date of publication and mention of the grant of the patent: **29.12.1993**
(21) Application number: 89116682.9
(22) Date of filing: 08.09.1989
(51) Int. Cl.: B60R 3/02

(54) **Body element for an industrial vehicle cab, incorporating a cab access step**
Karosserieteil für eine Fahrerhaus eines Lastkraftwagens mit integrierter Trittstufe
Elément de carrosserie pour cabine de véhicule industriel, incorporant une marche d'accés à la cabine

(30) Priority: 13.09.1988 IT 5339488 U
(43) Date of publication of application: 11.04.1990
(73) Proprietor: IVECO FIAT S.p.A., 10156 Torino (IT)
(72) Inventor: Toaldo, Antonio, I-10028 Trofarello (IT)
(74) Representative: Jorio, Paolo

(56) References cited:
- DE-A- 2 409 486
- US-A- 3 854 752
- US-A- 3 912 299
- US-A- 3 981 515
- US-A- 4 541 661

## Description

This invention relates to a body element for an industrial vehicle cab, incorporating a cab access step.

In industrial vehicles the cab floor is too high to allow direct access. These vehicles are therefore normally provided with steps on the cab sides to facilitate access thereto.

In such vehicles the angle by which the plane passing through the points of contact of the front wheels with the road surface and through the tangent to the profile of the front lower region is inclined to the horizontal is known as the "ramp angle" and is equal to the maximum theoretical slope which the vehicle can overcome. The ramp angle is a particularly important parameter in certain specific uses, for instance on building sites, where such vehicles may have to confront ramps of considerable slope or paths containing obstacles of considerable bulk. The size of this angle must therefore be conveniently large and must in any event exceed a limiting value established by the certification regulations for such vehicles.

Ergonomic considerations would suggest that the cab access steps should be positioned as low as possible. This however would result in an insufficient ramp angle, and consequently such steps are normally placed rather high, so penalising cab access comfort.

This problem has been partially solved by means of a step arrangement as disclosed in US-A-3 854 752, wherein a step arranged to facilitate access of a passenger to a cab of a vehicle is hinged to support means fixed to the cab. The step is free to pivot to a lower position determined by a restraining bracket under its own weight, and can move upwardly and laterally after a collision with an obstacle.

However, this arrangement is not free from drawbacks, since the use position of the step is not stable; the step may oscillate not only after a collision with an obstacle, but also because of the vibrations of the vehicle during the normal use.

The object of the present invention is to provide a body element for an industrial vehicle cab incorporating a cab acces step which obviates the said drawbacks.

Said object is attained according to the present invention by a body element for an industrial vehicle cab, comprising support means rigidly fixed to said cab, a step arranged to facilitate access of a passenger to said cab and hinging means for hinging said step to said support means about a substantially horizontal axis transverse to the vehicle running direction, said hinging means comprising a pin carried by said support means and a connection portion of said step rotatable about said pin, characterised by comprising auxiliary elastic connection means between said step and said support means for retaining said step elastically in the use position, and in at least one rearwardly raised position after a collision with an obstacle.

The present invention will be more apparent from the description of two embodiments thereof given hereinafter by way of non-limiting example with reference to the accompanying drawings in which:
Figure 1 is a front view of an industrial vehicle cab provided with a pair of body elements constructed in accordance with the present invention;
Figure 2 is a side view of a detail of the vehicle of Figure 1;
Figure 3 is a partial side elevational view shown in part section of a first embodiment of a body element according to the present invention;
Figure 4 is a a section on the line IV-IV of Figure 3;
Figure 5 is a partial side elevational view shown in part section of a second embodiment of the present invention; and
Figure 6 is a plan view shown in part section of a detail of the step of Figure 5. In Figures 1 and 2 the reference numeral 1 indicates overall an industrial vehicle cab, to the front lower region of which there is fixed a bumper 2. The letter A indicates the heretofore defined ramp angle imposed by design or legal reasons.

To the two sides of the cab 1 there are fixed two body elements 3 constructed in accordance with the present invention and comprising specifically a step 4 positioned at a height from the ground lower than the level of the floor, not shown, of the cab 1 to facilitate access thereto.

The step 4 comprises a substantially flat tread portion 5 and a support portion 6 facing frontwards of the vehicle and forming an obtuse angle with the portion 5. Along the inner edge of both said portions 5, 6 there is a shoulder 7 arranged to prevent the foot sliding under the vehicle.

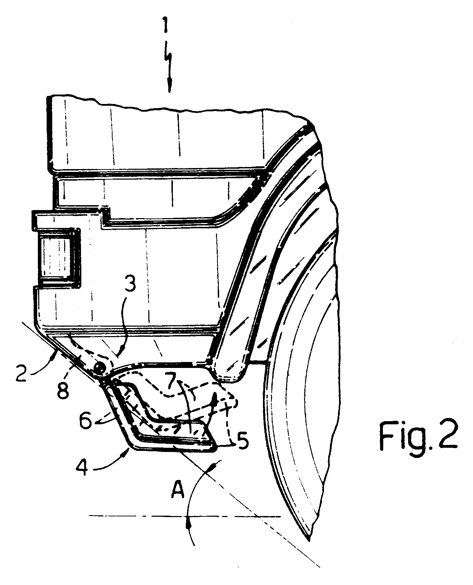

As described in detail hereinafter, according to the present invention each body element 3 also comprises a support bracket 8 fixed to the cab 1. The step 4 is hinged to said support bracket and can rotate about a substantially horizontal axis orthogonal to the vehicle running direction, between a lowered service position (shown by full lines in Figure 2) in which the support portion 6 is at least approximately horizontal and the step 4 partially lies within the ramp angle A, and a rearwardly and upwardly inclined position shown by dashed lines in Figure 2 and lying above the ramp angle A.

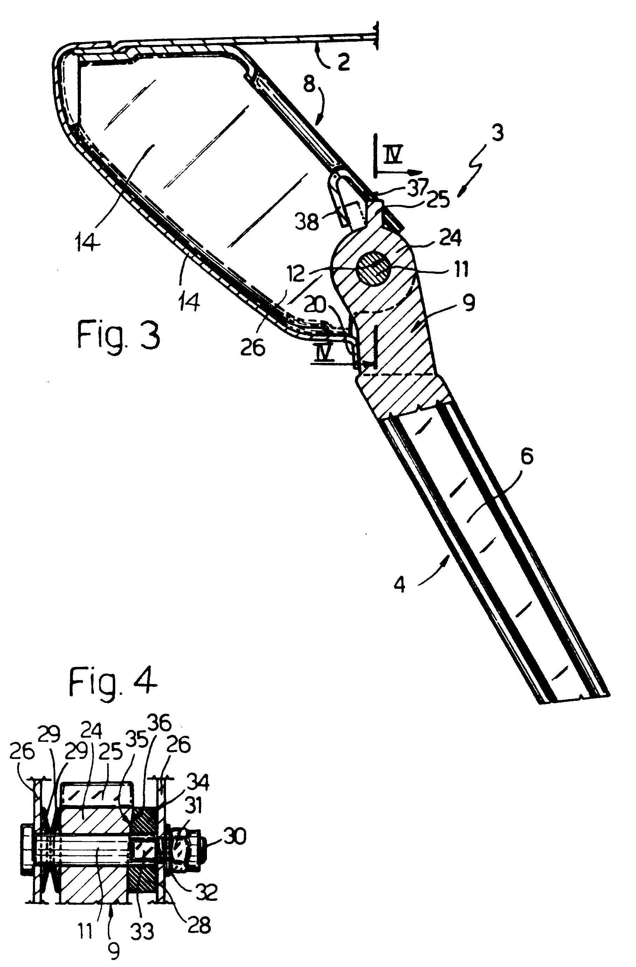

Figures 3 and 4 show a first embodiment of the element 3 in detail.

From the support portion 6 of the step 4 there upwardly extends an appendix 9. Said appendix 9 is hinged to a support bracket 8, welded to a lower inner portion of the bumper 2. The bracket 8 has a shell structure and is formed by welding together a plurality of pressed sheet metal elements 14.

The appendix 9 terminates upperly in a cylindrical bush 24 provided with a through bore 12 of horizontal axis, and from which a radial stop projection 25 extends upwards.

As can be seen in Figure 4, the appendix 9 is mounted between two lateral shoulders 26 of the support bracket 8 and is rotatable relative thereto about a pin 11 which engages the bore 12 of the bush 24 in an angularly free manner. On the pin 11 there are mounted a block 28 of elastomer material interposed between the bush 24 and a shoulder 26, and a pair of cup springs 29 interposed between the bush 24 and the other shoulder 26.

The pin 11 is provided with a threaded portion 30 for its axial and angular locking against the shoulders 26 by a nut 31 and washer 32. The block 28 is angularly locked on the pin 11 by a lateral flat portion 33 of this latter which cooperates with a corresponding inner flat portion, not shown, on the block 28 itself.

The block 28 also comprises an upper portion 34 bounded towards the appendix 9 by a surface 35 which is inclined starting from a horizontal diametrical crest. The appendix 9 has a surface 36 of complementary inclination, which cooperates with the surface 35 when the step is in its lowered position.

The support bracket 8 has a lower edge 20 and a seat 37 which are arranged to cooperate respectively with the appendix 9 and with the projection 25 when the step 4 is in its lowered position, and a stop tooth 38 arranged to cooperate with the projection 25 when the step 4 is in its position of maximum upturn.

The element 3 operates as follows. If the step 4 collides with an obstacle, it rotates backwards about the pin 11 against the damping action of the friction forces which are generated between the appendix 9 and the block 28 as a result of the high contact pressures produced by the cup springs 29.

It will be noted that the inclined surfaces 35, 36 of the block 28 and appendix 9 form a cam device which increases the compression of the springs 29 when the step 4 rotates about its service position.

After the collision with the obstacle, said damping action retains the step 4 in the position which it has reached. The step is then returned to its service position by the passenger himself on descending from the vehicle.

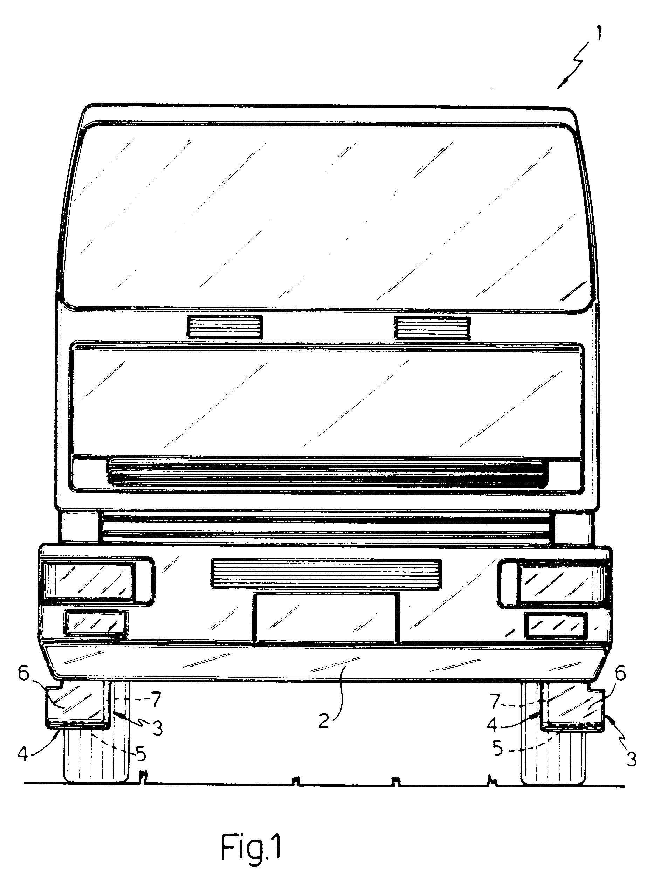

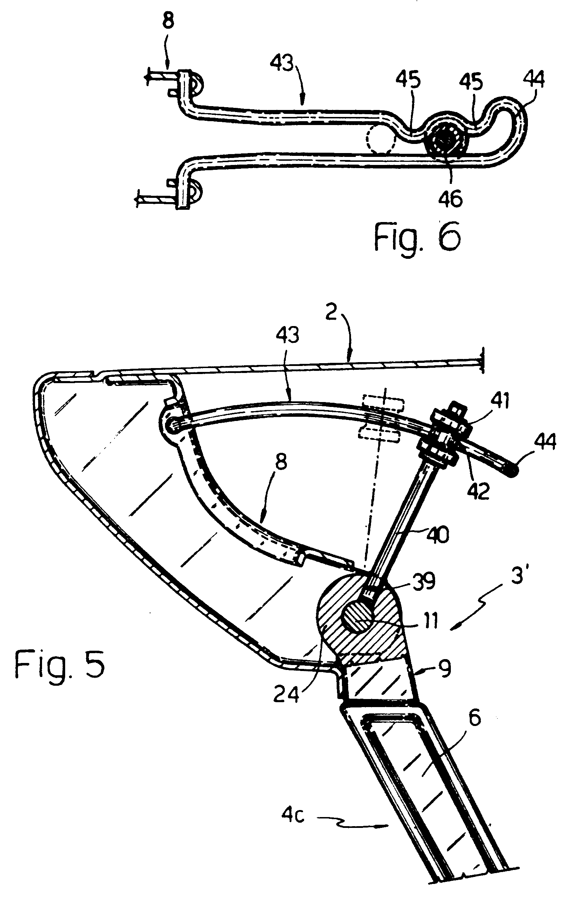

Figures 5 and 6 show a second embodiment 3' of the body element, which is described hereinafter with regard to the manner in which it differs from the described element 3, the same reference numerals being used to indicate identical details or details corresponding to those already described with reference to Figures 1 to 3.

In the element 3' (Figures 5 and 6), the step 4 comprises a rod 40 fixed into a radial hole 39 in the bush 24. The rod 40 therefore rotates rigidly with the step 4 about the pin 11 and carries at its upper end a substantially cylindrical element 41 provided with an annular groove 42. The element 41 is slidable within a substantially U-shaped arcuate elastic guide 43 formed of round metal bar and hinged at its ends to the support bracket 12. A branch of the guide 43 is profiled in proximity to the free end 44 of the guide to comprise a pair of successive undulations 45 extending towards the interior and defining between them a seat 46 in which the element 41 snap-engages when the step 4 is in its service position (shown by full lines).

The element 3' operates as follows.

The step 4 is normally kept in the service position by the guide 43. When it undergoes a collision of sufficient intensity to elastically deform the guide 43, the element 41 leaves the seat 46 and can slide freely along the guide 43. After the collision the element 41 rests on one of the ondulations (dashed-line position) to therefore define a stop position for the guide 4. Starting from this position, in which the step 4 is conveniently disposed outside the ramp angle, it can freely rotate further as a result of further collisions.

The advantage obtained by the elements 3 and 3' of the present invention is apparent from an examination of their characteristics. In particular, the step 4 can assume a service position which is sufficiently low to allow comfortable access to the cab 1, and can rise to define a large ramp angle. Such a service position is stable.

Finally, it is apparent that modifications can be made to the elements 3 and 3' provided they do not leave the scope of protection of the present invention. For example, keeping the hinging of the step 4 to the support bracket 8 unchanged, the accessory constraints such as the elastic, damping or stop elements can be varied. In particular these accessory constraints can be suitably combined.

## Claims

1. A body element for an industrial vehicle cab, comprising support means (8) rigidly fixed to said cab (1), a step (4) arranged to facilitate access of a passenger to said cab (1) and hinging means (11,9) for hinging said step (4) to said support means (8) about a substantially horizontal axis transverse to the vehicle running direction, said hinging means comprising a pin (11) carried by said support means (8) and a connection portion (9) of said step (4) rotatable about said pin (11), characterised by comprising auxiliary elastic connection means (28,29; 40,43) between said step (4) and said support means (8) for retaining said step (4) elastically in the use position and in at least one rearwardly raised position after a collision with an obstacle.

2. An element as claimed in claim 1, characterised in that said auxiliary connection means comprise damping means (28) for the relative oscillations between said step (4) and said support means (8).

3. An element as claimed in claim 2, characterised in that said damping means comprise a block (28) mounted on said pin (11) and cooperating under friction with said connection portion (9) of said step (4).

4. An element as claimed in claim 3, characterised by comprising elastic means (29) forcing said block (28) against said connection portion (9) of said step (4).

5. An element as claimed in claim 4, characterised in that said block (28) and said connection portion (9) of said stop (4) cooperate mutually by way of respective cam means (35, 36) arranged to produce elastic deformation of said elastic means (29) when said step (4) and said block (28) rotate relative to each other.

6. An element as claimed in any one of the preceding claims, characterised in that said auxiliary connection means comprise guide means (43) connected to said support means and a slidable element (41) rigid with said step (4) and engaging said guide means (43).

7. An element as claimed in claim 6, characterised in that said guide means (43) are elastic and form at least one snap-stopping position for said slidable element (41).

8. An element as claimed in claim 7, characterised in that said guide means comprise an arcuate guide (43) constructed of round metal bar shaped substantially in the form of a U and connected at its ends to said support means (8); said slidable element (41) being fixed to a rod (40) rigid with said connection portion (9) of said step (4) and disposed radially to said pin (11).

9. An element as claimed in any one of the preceding claims, characterised in that said support means comprise a bracket (8) rigid with the bumper (2) of said cab (1).

10. An element as claimed in any one of the preceding claims, characterised in that said step (4) comprises a tread portion (5) and a support portion (6) which form an obtuse angle between them.

11. An element as claimed in claim 10, characterised in that said connection portion (9) is an appendix of said support portion (6) of said step (4).

## Patentansprüche

1. Karrosserieteil für eine Kabine eines Lastkraftwagens, mit einer Stützeinrichtung (8), die starr an der Kabine (1) befestigt ist, einer Stufe (4), die den Zugang eines Fahrgastes zu der Kabine (1) erleichtert, und einer Scharniereinrichtung (11,9) zur scharnierförmigen Anbringung der Stufe (4) an der Stützeinrichtung (8) in einer im wesentlichen waagerechten Achse quer zu der Laufrichtung des Fahrzeugs, welche Scharniereinrichtung einen Stift (11), der durch die Stützeinrichtung (8) getragen wird, und einen Verbindungsbereich (9) der Stufe (4), die um den Stift (11) drehbar ist, umfaßt, **gekennzeichnet** durch eine elastische Hilfsverbindungseinrichtung (28,29:40,43) zwischen der Stufe (4) und der Stutzeinrichtung (8) zum elastischen Halten der Stufe (4) in der Gebrauchsposition und in wenigstens einer nach rückwärts angehobenen Position nach einer Kollision mit einem Hindernis.

2. Teil nach Anspruch 1, **dadurch gekennzeichnet**, daß die Hilfsverbindungseinrichtung eine Dämpfungseinrichtung (28) für Schwingungen zwischen der Stufe (4) und der Stützeinrichtung (8) umfaßt.

3. Teil nach Anspruch 2, dadurch **gekennzeichnet**, daß die Dämpfungseinrichtung einen Block (28) umfaßt, der auf dem Stift montiert ist und unter Reibung mit dem Verbindungsbereich (9) der Stufe (4) zusammenwirkt.

4. Teil nach Anspruch 3, dadurch **gekennzeichnet**, daß eine elastische Einrichtung (29) vorgesehen ist, die den Block (28) gegen den Verbindungsbereich (9) der Stufe (4) andrückt.

5. Teil nach Anspruch 1, dadurch **gekennzeichnet**, daß der Block (28) und der Verbindungsbereich (9) der Stufe (4) mit Hilfe von Nocken (35,36) zusammenwirken, die eine elastische Verformung der elastischen Einrichtung (29) hervorrufen, wenn die Stufe (4) und der Block (28) relativ zueinander gedreht werden.

6. Teil nach einem der vorhergehenden Ansprüche, dadurch **gekennzeichnet**, daß die Hilfsverbindungseinrichtung eine Führungseinrichtung (43) umfaßt, die mit der Stützeinrichtung verbunden ist, und ein gleitendes Element (41), das starr mit der Stufe (4) verbunden ist und die Führungseinrichtung (43) erfaßt.

7. Teil nach Anspruch 6, dadurch **gekennzeichnet**, daß die Führungseinrichtung (43) elastisch ist und wenigstens eine Rastposition für das gleitende Element (41) aufweist.

8. Teil nach Anspruch 7, dadurch **gekennzeichnet**, daß die Führungseinrichtung eine bogenförmige Führung (43) umfaßt, die aus einer runden Metallstange besteht, die im wesentlichen eine U-Form aufweist und mit ihren Enden mit der Stützeinrichtung (8) verbunden ist; wobei das Element (41) an einer Stange (40) befestigt ist, die starr mit dem Verbindungsbereich (9) der Stufe (4) verbunden und radial zu dem Stift (11) angeordnet ist.

9. Teil nach einem der vorhergehenden Ansprüche, dadurch **gekennzeichnet**, daß die Stutzeinrichtung einen Ansatz (8) umfaßt, der starr mit der Stoßstange (2) der Kabine (1) verbunden ist.

10. Teil nach einem der vorhergehenden Ansprüche, dadurch **gekennzeichnet**, daß die Stufe (4) einen Trittbereich (5) und einen Stutzbereich (6) umfaßt, die einen stumpfen Winkel miteinander bilden.

11. Teil nach Anspruch 10, dadurch **gekennzeichnet**, daß der Verbindungsbereich (9) ein Ansatz des Stützbereichs (6) der Stufe (4) ist.

## Revendications

1. Un élément de carrosserie pour cabine de véhicule industriel, comprenant des moyens de support (8) fixés rigidement sur ladite cabine (1), un marchepied (4), agencé pour faciliter l'accès d'un passager à ladite cabine (1) et des moyens d'articulation (11, 9) pour articuler ledit marchepied (4) sur lesdits moyens de support (8) autour d'un axe sensiblement horizontal, transversal à la direction de marche du véhicule, lesdits moyens d'articulation comprenant un axe (11) monté sur lesdits moyens de support (8) et une partie d'accouplement (9) dudit marchepied (4) susceptible de pivoter autour dudit axe (11), caractérise en ce qu'il comprend des moyens d'accouplement élastiques auxiliaires (28, 29; 40, 43) entre ledit marchepied (4) et lesdits moyens de support (8) pour retenir élastiquement ledit marchepied (4) en position d'utilisation et dans, au moins, une position relevée vers l'arrière après un choc sur un obstacle.

2. Un élément selon la revendication 1, caractérisé en ce que lesdits moyens d'accouplement auxiliaires comprennent des moyens d'amortissement (28) des oscillations relatives entre ledit marchepied (4) et lesdits moyens de support (8).

3. Un élément selon la revendication 2, caractérisé en ce que lesdits moyens d'amortissement comprennent un bloc (28) monté sur ledit axe (11), et coopérant avec frottement, avec ladite partie d'accouplement (9) dudit marchepied (4).

4. Un élément selon la revendication 3, caractérisé en ce qu'il comprend des moyens élastiques (29) pour solliciter ledit bloc (28) contre ladite partie d'accouplement (9) dudit marchepied (4).

5. Un élément selon la revendication 4, caractérisé en ce que ledit bloc (28) et ledit élément d'accouplement (9) de ladite butée (4) coopèrent mutuellement par l'intermédiaire de moyens en forme de came (35, 36) respectifs, agencés pour produire une déformation élastique desdits moyens élastiques (29) lorsque ledit marchepied (4) et ledit bloc (28) pivotent l'un par rapport à l'autre.

6. Un élément selon l'une quelconque des précédentes revendications, caractérisé en ce que lesdits moyens d'accouplement auxiliaires comprennent des moyens de guidage (43) reliés auxdits moyens de support et un élément glissant (41) monté rigide sur ledit marchepied (4), et venant en prise sur lesdits moyens de guidage (43).

7. Un élément selon la revendication 6, caractérisé en ce que lesdits moyens de guidage (43) sont élastiques et assurent, au moins, une position de blocage par encliquetage dudit élément glissant (41).

8. Un élément selon la revendication 7, caractérisé en ce que lesdits moyens de guidage comprennent un guide incurvé (43) réalisé à partir d'une barre métallique ronde conformée sensiblement en forme de U, et reliée à ses extrémités auxdits moyens de support (8); ledit élément glissant (41) étant fixé sur une barre (40) montée rigidement sur ladite partie d'accouplement (9) dudit marchepied (4) et disposé radialement par rapport audit axe (11).

9. Un élément selon l'une quelconque des précédentes revendications, caractérisé en ce que lesdits moyens de support comprennent une console (8) montée rigide sur le pare-chocs (2) de ladite cabine (1).

10. Un élément selon l'une quelconque des précédentes revendications, caractérise en ce que ledit marchepied (4) comprend une partie formant giron (5) et une partie formant support (6), formant entre elles un angle obtus.

11. Un élément selon la revendication 10, caractérisé en ce que ladite partie d'accouplement (9) est un embout de ladite partie formant support (6) dudit marchepied (4).
